# EUROPEAN PATENT SPECIFICATION

(11) **EP 1 814 831 B1**
(45) Date of publication and mention of the grant of the patent: **12.10.2011**
(21) Application number: 05807951.8
(22) Date of filing: 04.11.2005
(51) Int. Cl.: C05G 3/00, C05G 5/00, C05D 7/00, C05D 9/00

(54) **EFFERVESCENT TABLET COMPRISING A COLORANT**
FARBSTOFFHALTIGE BRAUSETABLETTE
COMPRIMÉ EFFERVESCENT CONTENANT UN COLORANT

(30) Priority: 04.11.2004 EP 04105531; 07.03.2005 EP 05101738; 09.03.2005 US 76413
(43) Date of publication of application: 08.08.2007
(73) Proprietor: Overwater, Jan, 1424 RP De Kwakel (NL)
(72) Inventor: Overwater, Jan, 1424 RP De Kwakel (NL)
(74) Representative: Beetz, Tom
(86) International application number: PCT/EP2005/055744
(87) International publication number: WO 2006/048444

(56) References cited:
- CA-A1- 2 122 873
- DE-U1- 20 104 183
- FR-A- 2 605 312
- FR-A- 2 628 734
- GB-A- 1 010 773
- GB-A- 2 134 506
- US-A- 3 197 302
- US-A- 4 710 394

## Description

The invention relates to an effervescent tablet comprising a colorant. More particularly, the invention relates to a method for giving color to water which is used for cut flowers. The invention also pertains to a combination of cut flowers and said tablet.

Effervescent tablets as such are known. For instance in British patent application GB 1075470 effervescent tablets which contain at least one test reagent or diagnostic agent to be dispersed in an aqueous liquid comprise a core and at least one covering layer, each containing a water-soluble dye is described. This relates to test reagent or diagnostic agent is therefore related to a completely different field and use.

In FR 2628734 soluble fertilizers in tablet form are disclosed, containing nutrient materials and an effervescence agent, so that the tablet bubbles and dissolves in water. The tablets may also contain a dye, to give an instant indication that the fertilizer has been added to the water. These tablets thus service another purpose, i.e. not a decorative but are used as an indicator for giving a measured amount of fertilizing material to a garden.

In CA 2122873 an effervescent tablet is formed which contains a carbonate, an organic acid, at least one dye, a solubilizing agent, and a binder. The tablet, which is non-toxic, can be dissolved in water, so that a dye is released which can be used to dye Easter eggs. Also this tablet served a different purpose and is used in a different field.

US 3197302 relates to an effervescent composition comprising a plant nutrient compound. This document does not disclose that the composition may contain a colorant for giving a color to water for cut flowers.

CA 2122873 relates to an effervescent colorant tablet which is used to color food, particularly Easter eggs. The acids of this document are not anhydrous.

In US 4710394 a dry preparation has been disclosed, which is not a tablet but likely a powder. This document does not suggest that the preparation could be effervescent, nor is there any motivation to make such effervescent preparation. This document further suggests using hydrates of organic acids. In the present invention it was found that the use of anhydrous organic acids is necessary for obtaining an effervescent tablet having sufficient stability for commercial use. This document describes that the preparation may contain a dye, but this dye is not intended for giving color to water.

DE 20104183 is a document pursuant to Art 54(3) EPC. In this document a composition with a plant nutrient and a liquid colorant has been described, which colorant is used to change the color of the water for cut flowers. This document does not disclose effervescent tablets.

British patent application GB 1442979 discloses a composition for keeping flowers fresh, which composition is in the form of an effervescent tablet which comprises nutrient for keeping flowers fresh. These tables do not contain colorants or dyes.

It is an object of the invention to provide a method for giving a color to water for decorative purposes, and more particularly for giving a color to water for cut flowers. In another object it is the purpose of the present invention to give a color to the water for flowers and also to give nutrient to the flower and/or to give an odor to the environment.

The invention relates to an effervescent tablet according to claim 1, comprising an organic acid, an alkali metal or earth alkali metal hydrogen carbonate, and a colorant for decorative use. More particularly, the invention relates to such tablets further comprising at least one of an aromatic substance and nutrient for plants or flowers.

The invention further provides in a method of giving a color to water, according to claim 4, for instance water in a bowl or the like. More particularly, the water is water for flowers, such as water in a vase. It is further commercially attractive to provide a combination of cut flowers and a tablet of the invention which can be used as such by the consumer. The tablet may for that purpose be attached to a label that can be provided together with the flowers or plant.

The effervescent tablet may be any effervescent tablet that is known in the art and that be sufficiently fast.

The production of effervescent tablets from, for instance, bicarbonates and solid organic carboxylic acids is known but not in combination with the other components mentioned above with the purpose of providing a composition for giving water for flowers a color. Further advantages are the easy handling and, as a result of the effervescent effect, the ability to dissolve rapidly, as well as a good mixing and thus a rapid effectiveness of the active components of the effervescent tablet composition according to the present invention. In a preferred embodiment the tablet is coated, for instance with a cellulose derivative such as hydroxypropyl methylcellulose. Coated tablets have the advantage that they prevent preliminary release of the colorant and further improve the resistance against humidity.

The following ingredients are mentioned as example only and should not be interpreted restrictively.

A suitable composition for the tablet of the invention may comprise one or more of the following components (expressed in wt.% based on the total weight of the mixture):
Optionally, a plant nutrient, for instance a sugar such as glucose and/or dextrose, in an amount of 0 to 96 wt.%, preferably 35 to 75 wt.%
Optionally, a surfactant, preferably in an amount of 1 to 4 wt.%.
Optionally, a bactericide for inhibiting or killing bacteria in the water for the flowers, preferably in an amount of 1 to 5 wt.%.

An organic carboxylic acid, preferably an organic dicarboxylic acid such as for instance succinic acid or tartaric acid, in an amount of 5 to 40 wt.%, more preferably 10 to 26 wt.%.

An alkali metal or earth alkali metal hydrogen carbonate, 6 to 40 wt.%, more preferably 15 to 30 wt.%. The alkali metal, particularly sodium or potassium, hydrogen carbonates are preferred. Sodium chloride salt, 25-60%.

The above mixture can be varied but at least contains the organic carboxylic acid, the hydrogen carbonate sodium chloride and the colorant. This mixture forms the basis for making an effervescent tablet that is suitable for giving a color to water. It is therefore also an objective to provide a mixture that is suitable as a basis for making an effervescent tablet, which mixture as such is already able to give color to water, and which mixture at least comprising a colorant can be used for giving color to water for use with cut flowers.

The organic carboxylic acid is in its anhydrous form. It was found that the use of anhydrous organic carboxylic acids substantially increase the stability of the effervescent tablet. Such tablets are not hygroscopic and can be stored and sold without the need for special water-impermeable packaging. Suitable anhydrous organic carboxylic acids include, but not restricted to, citric acid, oxalic acid, pyruvic acid, malic acid, malonic acid, succinic acid, glutaric acid, adipic acid, gluconic acid, lactic acid, tartaric acid, and mixtures thereof. Organic dicarboxylic acids are more preferred, and most preferred are anhydrous hydroxy dicarboxylic acids such as anhydrous tartaric acid

The mixture further may comprise a thickening agent such as polyethylene glycol (for instance PEG 6000, Na stearyl fumarate, and the like) for preventing sticking.

The nutrient may be any common nutrient for use in flowers and plants, and usually contain a sugar or a mixture of sugars, such as glucose, dextrose, and the like.

The mixture may contain common bactericides and fungicides such as quaternary ammonium compound, containing an alkyl radical, for example, one of the following Barquat® MS-100 (myristyl dimethyl benzyl ammonium chloride dihydrate), Bardac® 22 (didecyl dimethyl ammonium chloride), Bardac® 20 (a mixture of 50 % by weight octyl decyl dimethyl ammonium chloride; 25% by weight dioctyl dimethyl ammonium chloride and 25% by weight didecyl dimethyl ammonium chloride).

The tablet further must contain a colorant. The colorant may be any colorant that does not harm the flowers. In principle almost any colorant can be used in quantities sufficient to give the desired color intensity. Suitable amounts are 0.1 to 10 wt.%, more preferably 0.5 to 5 wt.%. Suitable colorants include, but are not limited to ecoline pigments, food pigments (E dyes), acid pigments, metal complex acid dyes, basic dyes, chrome dyes, disperse dyes, solvent dyes, direct dyes, phthalates fast dyes, naphthol dyes, reactive dyes, such as pigment emulsion dyes, fast color salts dyes, rapid fast dyes, aluminum lake color (pigments) wet dyes, natural dyes, and the like.

The tablet may contain other components such as potassium chloride (1 to 5 wt.%), aluminum sulfate (1 to 5 wt.%), and the like.

The tablet may contain aromatic compounds such as ethereal oils, hesperides, air fresher, and the like, such as for instance the oils rose Sonia, rose Tros, freesia, carnation, lily-of-the-valley, lilac, floral bouquet, sweet freesia, rose fruity, banana sweet, and cinnamon.

In an example not forming part of the invention the following mixture for an effervescent tablet was made:

| | |
|---|---|
| Flower Food Clear® (Plant nutrient mix) | 56 wt.% |
| tartaric acid | 14.8 wt.% |
| NaHCO₃ | 26.3 wt.% |
| PEG 6000 | 2.9 wt.% |

To this mixture 1 wt.% of Tartrazine E-120 (a colorant) based on the weight of the mixture was added, i.e. to 495 grams of above mixture 5 grams of colorant were added.

The above tablets are particularly suitable for small scale production. However, on large scale production the apparatus for making the tablet may clog. It is therefore a further objective of the invention to provide mixtures that are better suited for large scale production, and which nevertheless have the advantageous properties of the previous tablets, giving color to water for use with cut flowers, without being detrimental to the flower or plant. It was found that the presence of salt (sodium chloride), preferably anhydrous salt provides mixtures that are particularly suitable for large scale production. A non-limitative example of such tablet is a tablet obtained from the following mixture (in wt.%):

| | |
|---|---|
| Sodium chloride salt PDV* | 45.51 |
| Dissolvine Na2 (Na₂EDTA) | 5.68 |
| PVP-iodine | 1.71 |
| Lutrol F68 | 2.12 |
| L-Leucine | 2.12 |
| KHCO₃ anhydrous | 23.28 |
| Adipic acid | 19.58 |
| Silver nitrate | 0.004 |
| (*PDV=pure vacuum dried) | |

To this mixture 1 to 5 wt.% of a colorant, based on the weight of this mixture, were added.

Tablets comprise 25 to 60 wt.% of sodium chloride salt, and preferred tablets to a total of 3 to 20 wt.% of solubilizers (such as chelating agents, including EDTA an the like, and viscosity modifiers (thickening agents) such as polyethylene glycols). It was also found that an aseptic compound, such as PVP-iodine (povidone iodine), silver nitrate, and the like, or mixtures thereof could advantageously added to prevent microbiocidal contamination. Suitable amounts of aseptic compound are 0.5 to 15 wt.%. The other ingredients, such as colorant, organic acid, and alkali metal or earth alkali metal hydrogen carbonate are added in the amounts previously mentioned.

Suitable tablets have a total weight of 0.5 to 10 grams, more preferably 1 to 5 grams, most preferably about 3 to 4 grams. Sizes of the tablet are not important but usually are 5 to 100 mm, more preferably 15 to 30 mm, for instance 20 or 23 mm.

## Claims

1. An effervescent tablet comprising 5-40 wt.% of an anhydrous organic carboxylic acid, 6-40 wt.% of an alkali metal or earth alkali metal hydrogen carbonate, 25-60 wt.% sodium chloride, and a colorant for giving color to water for use with cut flowers.

2. The tablet of claim 1 further comprising at least one of an aromatic odor substance and nutrient for plants or flowers.

3. The tablet of claim 1 or 2 in combination with cut flowers.

4. Use of a mixture comprising 5-40 wt.% of an anhydrous organic carboxylic acid, 6-40 wt.% of an alkali metal or earth alkali metal hydrogen carbonate, 25-60 wt.% sodium chloride, and a colorant for giving color to water for use with cut flowers.

5. The use according to claim 4 wherein the mixture is the tablet of any one of claims 1 to 3.

## Patentansprüche

1. Brausetablette umfassend 5 bis 40 Gew.-% eines Anhydrids einer organischen Carbonsäure, 6 bis 40 Gew.-% eines Alkalimetall- oder eines Erdalkalimetall-Hydrogencarbonats, 25 bis 60 Gew.-% Natriumchlorid und ein Farbstoff,zum Färben des Wassers zur Verwendung mit Schnittblumen.

2. Brausetablette nach Anspruch 1, weiterhin umfassend mindestens eine aromatische Duftsubstanz und Nährstoff für Pflanzen oder Blumen.

3. Brausetablette nach Anspruch 1 oder 2 in Kombination mit Schnittblumen.

4. Verwendung einer Mischung umfassend 5 bis 40 Gew.-% eines Anhydrids einer organischen Carbonsäure, 6 bis 40 Gew.-% eines Alkalimetall- oder eines Erdalkalimetall-Hydrogencarbonats, 25 bis 60 Gew.-% Natriumchlorid und ein Farbstoff zum Färben des Wassers zur Verwendung mit Schnittblumen.

5. Verwendung nach Anspruch 4, wobei die Mischung die Brausetablette nach einem der Ansprüche 1 bis 3 ist.

## Revendications

1. Pastille effervescente comprenant 5-40 % en poids d'un acide carboxylique organique anhydre, 6-40 % en poids d'un hydrogénocarbonate de métal alcalin ou de métal alcalino-terreux, 25-60 % en poids de chlorure de sodium, et un colorant pour donner de la couleur à l'eau à utiliser pour des fleurs coupées.

2. Pastille de la revendication 1 comprenant en outre au moins l'un parmi une substance odorante aromatique et un nutriment pour des plantes ou des fleurs.

3. Pastille de la revendication 1 ou 2 combinée avec des fleurs coupées.

4. Utilisation d'un mélange comprenant 5-40 % en poids d'un acide carboxylique organique anhydre, 6-40 % en poids d'un hydrogénocarbonate de métal alcalin ou de métal alcalino-terreux, 25-60 % en poids de chlorure de sodium, et un colorant pour donner de la couleur à l'eau à utiliser avec des fleurs coupées.

5. Utilisation selon la revendication 4 où le mélange est la pastille de l'une quelconque des revendications 1 à 3.
